# EUROPEAN PATENT APPLICATION

(11) **EP 1 387 563 A2**
(43) Date of publication of application: **04.02.2004**
(21) Application number: 03015383.7
(22) Date of filing: 08.07.2003
(51) Int. Cl.: H04N 1/21

(54) **Photography apparatus with information tabulating device and method**

(30) Priority: 10.07.2002 JP 2002201527; 19.06.2003 JP 2003175284
(71) Applicant: FUJI PHOTO FILM CO., LTD., Kanagawa-ken (JP)
(72) Inventor: Iida, Takayuki, Kaisei-machi, Ashigarakami-gun, Kanagawa (JP)
(74) Representative: Klunker . Schmitt-Nilson . Hirsch

(57) **Abstract**

DSC 60 collects operation information representing an operation state of DSC 60, (for example, a total number of times that photographing is carried out, numbers of uses of each of various kinds of photographing modes, and a number of uses of a flash) and the collected information is recorded in a recording medium 58. The operation information is read out from the recording medium 58 when a customer requests a DPE-request accepting shop 12 for photographic processing, transferred to a data center 16 through a communication network 50, and stored in a photograph-related information DB 48. A camera manufacturer 18 regularly receives from a data center 16 operation information corresponding to DSC which is manufactured by the camera manufacturer 18. The received operation information is tabulated for each model of DSC for analysis and used for improvement of DSC and development of a next generation model of DSC.

## Description

### BACKGROUND OF THE INVENTION

### (i) Field of the Invention

The present invention relates to a photography apparatus, an information tabulating device, and a method of utilizing tabulated information, a functional improvement system for a photography apparatus, and a method for functional improvement of a photography apparatus. More particularly, the present invention relates to a photography apparatus which works by operation thereof by a customer, an information tabulating device which collects and tabulates information from the photography apparatus, a method of utilizing tabulated information which is tabulated by the information tabulating device, a functional improvement system for the photography apparatus which system improves functions of the photography apparatus, and a method for functional improvement of a photography apparatus.

### (ii) Description of the Related Art

A digital still camera (hereinafter called as DSC) with a configuration, in which a subject is photographed by an imaging element such as CCD (charge coupled device), an analog image signal obtained by the photographing is converted to a digital image data which, thereafter, is stored in an information storage medium such as a smart media card (R) , has an advantage that it is possible to confirm on the spot, by reproduction and display of a photographed image on LCD (a liquid crystal display) just after photographing, whether photographing has been successfully executed or not, and recently, the digital still cameras have rapidly become popular. With regard to the image photographed by DSC, it is possible, for example, to preserve the image as a high-quality photographic print after a customer brings the image data into a DPE (developing, printing, and enlarging) request accepting shop and requests photographic processing such as photographic printing, or to record in a quick manner an image represented by the image data on a piece of paper and the like, using a printer owned by the customer.

A technique has been proposed in which operation information representing operation state of image forming apparatuses and monitoring information generated by externally monitoring the image forming apparatuses are collected, and the image forming apparatuses are administrated based on the collected operation information and monitoring information (for example, see Japanese Patent Application Laid-Open (JP-A) No. 2003-76533). Incidentally, DSC manufacturers have been marketing DSC after testing the performance, functions, , the durability of DSC, and the like during development and designing of DSC to confirm that the results satisfy predetermined standards. However, it is rare that the performance, the function, the durability and the like of DSC which has been marketed meet requirements of customers. Accordingly, improvements of DSC has been ordinarily made in order to increase the customer satisfaction even after marketing. Moreover, it is indispensable for improvement of DSC and development of a new model of DSC to collect an operation state (for example, how a customer uses DSC) of a manufactured DSC as information.

However, the fact is that the above collection of information depends on, for example, complaints from customers who have bought DSC, or, replies written in post cards, which have been prepared by the manufacturer for registration and management of customers who have bought DSC and have included questionnaires, and the like returned from customers who have bought DSC. Then, there have remarkably been lack in information for understanding of the operation state of DSC. Accordingly, there has been a problem that improvement of DSC and development of a new model of DSC (improvement and development based on actual operation statuses of DSC), which cause improvement of the customer satisfaction, have not been made.

### SUMMARY OF THE INVENTION

The present invention has been made considering the above-described circumstances, and the object is to provide a photography apparatus, an information tabulating device, and a method of utilizing tabulated information, a functional improvement system for a photography apparatus, and a method for functional improvement of a photography apparatus, which can increase the satisfaction of customers who use the photography apparatus.

To this end, a first aspect of the present invention is to provide a photography apparatus which operates according to operation thereof by a customer, the photography apparatus comprising a first collection section which collects operation information representing an operating state of the photography apparatus, and a processing section which carries out processing for transferring operation information collected by the first collection section to an information tabulating device which tabulates the operation information.

A photography apparatus according to the invention is a photography apparatus which operates according to the operation thereof by a customer. Preferably, it is a digital still camera (DSC: specifically, DSC designed specially for photographing and the like) . However, it may be an ordinary camera, a digital video camera, DSC attached to a portable apparatus such as a cellular phone, and PDA (personal digital assistance). In the invention, operation information representing an operating state of the photography apparatus is collected by the first collection section.

For example, when the photography apparatus is provided with a function by which a subject is photographed, and image data obtained by the photographing is recorded in the information storage medium, for example, a number of times photographing is carried out, numbers of uses of each of various kinds of photographing modes (in the case of a photography apparatus provided with plurality of photographing modes), a number of uses of a flash (in the case of a photography apparatus provided with a flash), numbers of uses of each of various kinds of flash emitting modes (in the case of a photography apparatus provided with plurality of flash emitting modes), numbers of uses of each of photographing magnifications at photographing (in the case of a photography apparatus with a configuration in which the photographing magnification can be changed), amount of time that a moving picture is photographed(in the case of a photography apparatus with a configuration in which a moving picture can be photographed), an amount of time a photographed moving picture is reproduced (in the case of a photography apparatus with a configuration in which a photographed moving picture can be reproduced), a number of uses of a continuous photographing mode, a total number of times photographing is carried out in continuous photographing mode (in the case of a photography apparatus provided with a continuous photographing function), a number of deletions of image data, numbers of deletions of image data for each of various kinds of photographing modes (in the case of a photography apparatus provided with plurality of photographing modes), a number of times a battery is changed, and a number of times an information storage medium is loaded to the photography apparatus (in the case of a photography apparatus with a configuration in which the information storage medium can be loaded), and the like are listed as the operation information. The first collection section can have a configuration in which at least one of the above-listed pieces of information is collected as operation information.

Also, the collection of the operation information by the first collection section can be realized, specifically, for example, by securing areas which stores the operation information in the storing section of memories and the like beforehand, and by suitably updating information stored in the above-described areas at timing, for example, whenever photographing is executed using the photography apparatus, whenever an image (for example, a moving picture) is reproduced, and whenever a battery is changed.

Also, the processing section executes, as the processing for transferring the operation information collected by the first collection section to the information tabulating device which tabulates the operation information. For example, in the case where the photography apparatus according to the invention is provided with the function by which a subject is photographed and the image data obtained by the photographing is recorded in the information storage medium, for example, processing by which the operation information is recorded in the information storage medium can be applied as processing by the processing section. In this aspect, the operation information recorded in the information storage medium is read from the information storage medium together with the image data, for example, when image output such as photographic printing is executed, and transferred to the information tabulating device. Therefore, the communication section to be described later is unnecessary and the configuration of the photography apparatus becomes simple.

Furthermore, when the photography apparatus is provided with a communication section which can communicate with the information tabulating device through a communication line, processing by which the operation information is transmitted to the information tabulating device through the communication section can be applied as processing by the processing section. In this aspect, processing such as loading the information storage medium into the photography apparatus in order to record the operation information and taking out of the medium from the photography apparatus in order to read the operation information from the medium for transferring becomes unnecessary.

As described above, according to the photography apparatus of the present invention, the operation information is collected and the collected operation information is transferred to the information tabulating device. Thus, the operation information from each photography apparatus according to the invention gather in the information tabulating device, and improvement of the photography apparatus, development of a new model of the apparatus and the like can be realized by use of the gathered operation information so that the satisfaction of customers who use the photography apparatus is increased. Accordingly, the satisfaction of customers who use the photography apparatus can be increased by the invention.

Incidentally, the operation information collected by the above-described photography apparatus is useful for improvement of the photography apparatus, development of a new model of the apparatus, and the like. If the photography apparatus is DSC or a digital video camera designed specially for photographing, information representing photographing conditions is generated and recorded during photographing (for example, photographing information is recorded in DSC designed specially for photographing as an image file, for example, in the EXIF format or another format together with the image data) . Some of ordinary cameras (non-digital cameras) generate information representing photographing conditions and record the information on a photographic film (for example, an APS film) or another type of recording medium (for example, contained memories and the like) and the above information (photographing information) is also useful for improvement of the photography apparatus and development of a new model of the apparatus.

The information tabulating device according to the invention comprises a second collection section which performs at least one of collection of respective operation information from each of a plurality of the photography apparatus, and collection of photographing information from each of the plurality of photography apparatus which is provided with a function by which a subject is photographed and image data obtained by the photographing is recorded in an information storage medium together with the photographing information representing photographing conditions during photographing; and a tabulation section which tabulates, for each model of the photography apparatus, the operation information or the photographing information, which has been collected by the second collection section.

In the information tabulating device according to the invention, the second collection section performs at least one of collection of the operation information from each of the plurality of photography apparatus, and collection of the photographing information from each of the plurality of photography apparatuses which is provided with a function by which a subject is photographed and image data obtained by the photographing is recorded in an information storage medium together with the operation information representing photographing conditions during photographing. Thereby, information which is useful for improvement of the photography apparatus and development of a new model of the photography apparatus gathers in the information tabulating device.

Also, a tabulation section tabulates, for each model of the photography apparatus, the operation information or the photographing information which has been collected by the second collection section. Though the information collected by the second collection section is information simply collected from plurality of photography apparatus, the information is tabulated in the tabulation section and processed to information which can be easily used for improvement of the photography apparatus, development of a new model of the photography apparatus, and the like. Accordingly, the satisfaction of customers who use the photography apparatus can be increased.

The information which has been collected and tabulated by the information tabulating device can be used, specifically, in the following way. That is, according to the method of utilizing the tabulated information of the invention, at least one of the suitability of the performance of the photography apparatus, the suitability of the functions of the photography apparatus, and the durability of the photography apparatus is analyzed for each model of the photography apparatus, based on operation information and photographing information which has been tabulated for each model of the photography apparatus using the information tabulating device, and the results of the analysis are reflected on the design of the photography apparatus.

Since the information tabulating device according to the invention tabulates the collected information for each model of the photography apparatus, the tabulated information becomes information unique to each model of the photography apparatus (for example, information precisely reflecting the performance, the functions, the durability and the like for each model of photography apparatus) . Since at least one of the suitability of the performance with which a photography apparatus is provided, the suitability of the functions with which the photography apparatus is provided, and the durability of the photography apparatus is analyzed for each model of the photography apparatus, based on the above information, and the analyzed results are used for the design (improvement of apparatus or development of a new model of apparatus) of the photography apparatus in the invention, the design of the photography apparatus can be changed so that the requirements of customers are more suitably met. Accordingly, the satisfaction of customers who use the photography apparatus can be increased.

Furthermore, it is preferable that lifetimes of components in the photography apparatus are analyzed for each photography apparatus, based on the operation information or the photographing information both of which have been collected by the information tabulating device, and advice information representing advice for change or replacement of a component in the photography apparatus is generated for each of the photography apparatus, based on results of the analysis.

The information collected by the information tabulating device precisely represents the wear-out rate and the like of each component in each photography apparatus, which wear-out is caused by use of each photography apparatus. The lifetimes of components in the photography apparatus are analyzed for each photography apparatus and advice information representing advice regarding exchange or replacement of the components in the photography apparatus is generated for each of the photography apparatus, based on the results of the analysis. Thus, the generated information is provided to each customer and is useful for the customers to consider the change or replacement of components in the photography apparatus. Accordingly, the satisfaction of customers who use the photography apparatus can be increased.

A second aspect of the invention is to provide a photography apparatus which photographs a subject, selectively using a plurality of functions comprising: a control section which controls the photography apparatus so that information on used of each of the functions, which information is useful for improvement of each of the functions is collected; a storing section which stores the collected information; and a processing section which outputs the stored information.

In the invention, the processing section comprises at least one of a communication section which can transmit and receive information and a removable storage medium.

Information on use of each of the plurality of functions is at least one of a number of uses of each of the functions, an amount of time that each of the functions is used, and a repair history of components in the photography apparatus which respectively achieve the functions.

Also, the plurality of functions of the photography apparatus includes at least one of photographing, selection of photographing modes, use of a flash, selection of flash emitting mode, selection of photographing magnification, photographing of a moving picture, reproduction of a moving picture, continuous photographing, selection of continuous photographing mode, deletion of image data, change of a battery, and loading of a storage medium into the photography apparatus.

A third aspect of the present invention there is to provide a functional improvement system for a photography apparatus comprising: the photography apparatus according to the invention; an accumulation section which accumulates information output from the processing section of the photography apparatus; and an analysis section in which the information which has been accumulated in the accumulation section is analyzed, and the results of the analysis are used for functional improvement of the photography apparatus.

Such a system may have a configuration in which each of the accumulation section and the analysis section is provided with a communication section and the communication sections are connected to each other through a communication network. And, the above system may have a configuration in which the photography apparatus further comprises a communication section which is connected to each of communication sections of the accumulation section and the analysis section through a communication network. In this case, the communication section of the photography apparatus may be a cradle provided with a charging function and a communication function. The accumulation section includes a database.

The processing section of the photography apparatus may have a configuration in which the section is provided with a function by which input from the outside is received and the results of the analysis of the information in the analysis section are input to the processing section of the photography apparatus. In such a case, the results of the analysis may include advice to a user of the photography apparatus and the advice may be related to at least one of change of components, repairing, and selection of the functions.

A fourth aspect of the present invention is to provide a method for functional improvement of a photography apparatus which photographs a subject, selectively using plurality of functions comprising: collecting information on use of each of the functions, which information is useful for improvement of each of the functions; storing the collected information; outputting the stored information; accumulating the output information; and analyzing the accumulated information and the results of the analysis are used for functional improvement of the photography apparatus.

### BRIEF DESCRIPTION OF THE DRAWINGS

Fig. 1 is a block diagram showing a schematic configuration of a photographic processing system according to the embodiment.
Fig. 2A is a perspective view of DSC according to the invention as viewed from the front.
Fig. 2B is a perspective view of DSC according to the invention as viewed from the back.
Fig. 3 is a block diagram showing a schematic configuration of an electric system in DSC shown in Fig. 2.
Fig. 4 is a flow chart showing the contents of operation-information collection processing which is executed in DSC.
Fig. 5 is another flow chart showing the contents of operation-information collection processing which is executed in DSC.

### DETAILED DESCRIPTION OF THE INVENTION

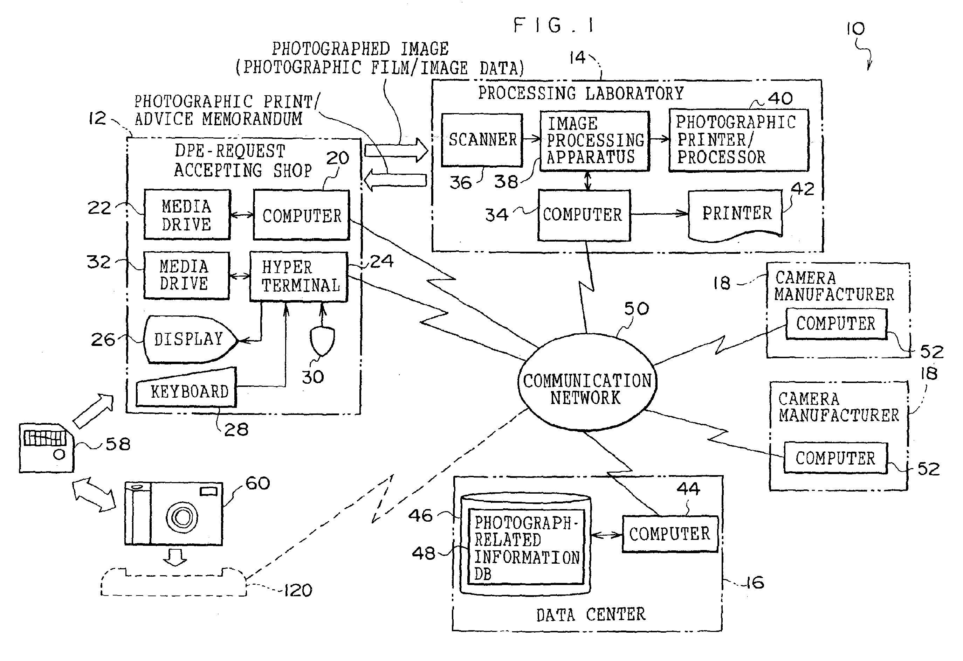

Hereinafter, one example of embodiments of the present invention will be explained in detail, referring to drawings. Fig. 1 shows a photographic processing system 10 according to an embodiment. The photographic processing system 10 according to the embodiment comprises: DPE-request accepting shops 12, which accepts a request for photographic processing such as photographic printing and the like, at various places; a processing laboratory 14 in which photographic processing requested by a customer through the DPE-request accepting shop 12 is executed; a data center 16 which executes centralized management of various kinds of information related to the photographic processing; and plurality of camera manufacturers 18 which manufacture cameras used for photography by customers.

Each of the DPE-request accepting shop 12 is provided with a computer 20 which is operated by a shop clerk at the shop 12 and a hyper-terminal 24 which is operated by a customer visiting the DPE-request accepting shop 12. A media drive 22 is connected to the computer 20.

In the embodiment, there are three kinds of requesting forms when a customer makes a request for photographic processing. According to a first requesting form, a customer takes a photograph of a subject using a digital still camera designed specially for photographing, a digital video camera and a digital still camera (Hereinafter called as "DSC" and an example of the DSC, to which the invention is applied, is shown in Fig. 1 with reference numeral "60") which is attached to a portable apparatus such as a cellular phone, and PDA; image data is recorded (recorded as an image file in, for example, an EXIF (Exchangeable Image File) format or another format) on a recording medium 58 (for example, a smart media card (R), a compact flash (R), a memory stick (R) and the like. As one example, the external appearance of a smart media card (R) is shown in Fig. 1); and the recording medium 58 is brought into a DPE-request accepting shop in which the customer makes a request for photographic processing.

The media drive 22 has a function by which information is read from or written into various kinds of recording medium 58. Moreover, the computer 20 to which the media drive 22 is connected is connected to (a computer 34 therein, to be described later) the processing laboratory 14 through a communication network 50. When photographic processing is requested according to the first requesting form, the DPE-request accepting shop 12 accepts the request for the photographic processing by receiving the recording medium 58 which the customer has brought in, reads the image data (image file) of the photographed image from the received recording medium 58 using the media drive 22, transmits the read image data to the processing laboratory 14 using the computer 20, and requests the processing laboratory 14 for execution of the photographic processing for which the request has been accepted from the customer.

According to a second requesting form, photographic processing is requested by transmitting image data (image data in, for example, an EXIF format or another format), which has been obtained when a customer takes a photograph of a subject by DSC, to a DPE-request accepting shop 12 through a computer network such as the Internet. The computer 20 has a function by which information is transmitted or received through the Internet and the like. Thereby, when photographic processing is requested according to the second requesting form, the DPE-request accepting shop 12 accepts a request for photographic processing by receiving, at computer 20, image data of photographed image which has been transmitted from the customer through the Internet, and requests a processing laboratory 14 for execution of photographic processing, for which the customer has made a request, by transmitting the received image data to the processing laboratory 14 from the computer 20.

Furthermore, according to a third requesting form, photographic processing is requested by bringing a photographic film, on which an image of a subject photographed with a camera by a customer is exposure-recorded, into the DPE-request accepting shop 12. When photographic processing is requested according to the third requesting form, the DPE-request accepting shop 12 accepts the photographic-processing request by receiving the photographic film which the customer has brought into the shop 12, and requests the processing laboratory 14 for execution of photographic processing, for which the customer has made a request, by transmitting the received photographic film to the laboratory 14.

Moreover, the hyper terminal 24 provided in the DPE-request accepting shop 12 comprises a personal computer (PC) with a configuration (not shown) in which CPU, ROMs (read-only memories), RAMs (random access memories), and I/O ports are connected to each other through a bus and a hard disk drive (HDD: not shown), a display 76 which displays images and the like, a keyboard 28, a mouse 30, and a media drive 32 are connected to the I/O ports, respectively. The media drive 32, as well as the media drive 22, has a function by which information is read from or written into various kinds of the recording medium 58. In addition, the hyper terminal 24 is also connected to the communication network 50.

A computer 34, a scanner 36, an image processing apparatus 38, and a photographic printer/processor 40 are provided in the processing laboratory 14. The computer 34 has a configuration (not shown) in which a CPU, ROMs, RAMs, and I/O ports are connected to each other through a bus, and various kinds of peripherals are connected to the I/O ports. Here, a keyboard, a display, a mouse, and a hard disk drive (HDD) are listed as peripherals connected to the I/O ports. When photographic processing is requested according to the first requesting form or the second requesting form, the computer 34 receives image data of the photographing image which has been transmitted from the DPE-request accepting shop 12 and outputs the image data to the image processing apparatus 38.

When photographic processing is requested according to the third requesting form, the photographic film, on which the image sent from the DPE-request accepting shop 12 is exposure-recorded and made visible through processing such as developing, is placed on the scanner 36. The scanner 36 reads the image (image which is made visible through processing such as developing) recorded on the placed photographic film and outputs image data obtained by this reading to the image processing apparatus 38.

The image processing apparatus 38 executes predetermined image processing of image data input from the scanner 36 or the computer 34, and the photographic printer/processor 40 executes photographic printing (recording images on photographic paper by scanning and exposing laser beams, which are modulated according to images to be recorded on the photographic paper, and developing the photographic paper on which the image is exposure-recorded) using the image data after image processing by the image processing apparatus 38. Here, the types and processing conditions for image processing to be executed in the image processing apparatus 38 are decided by the computer 34.

The computer 34 provided in the processing laboratory 14 is connected to the communication network 50 and can communicate with the hyper terminal 24 in the DPE-request accepting shop 12 and the computer 44 (will be described later) in the data center 16 through the communication network 50. Moreover, a printer 42 by which characters and the like are recorded on a recording medium such as paper is connected to the computer 34.

On the other hand, the computer 44 and a large capacity storage device 46 comprising HDDs and the like are provided in the data center 16. The computer 44 is connected to the communication network 50 and can communicate with the computer 20 provided in the DPE-request accepting shop 12 and computers 52 of a plurality of camera manufacture 18, respectively, through the communication network 50. Furthermore, a photograph-related information DB (database) 48 which stores various kinds of information related to the photographic processing is provided in the storage device 46. The storage device 46 is connected to the computer 44 which writes/reads information into/from the photograph-related information DB 48.

Subsequently, the digital still camera (Hereinafter called as DSC 60), to which the invention is applied, among various kinds of photography apparatuses which are owned by the customer of the photographic processing system 10 according to the embodiment, will be explained.

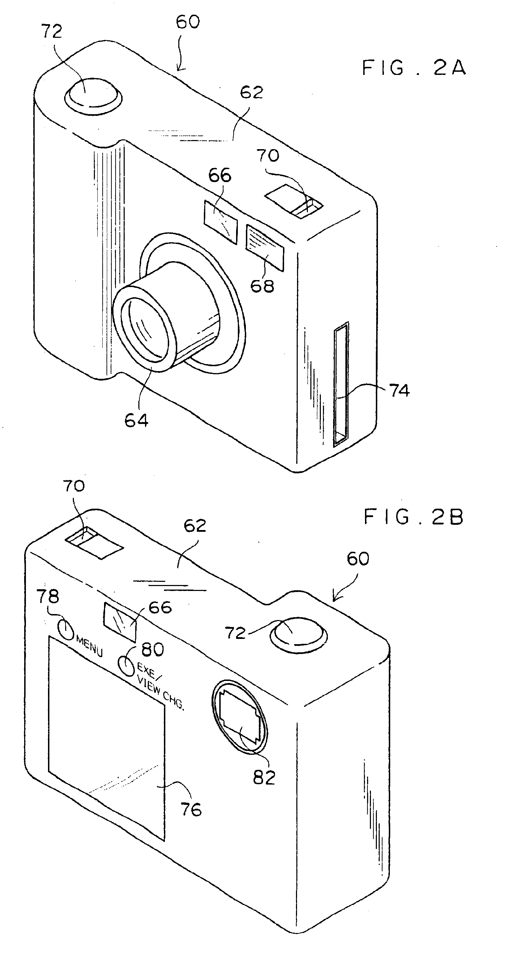

Figs. 2A and 2B show DSC 60 as the photography apparatus according to the invention. A main body 62 of DSC 60 has approximately a box shape and a projection (holding section) is formed at the left side as viewed from the front in order to facilitate holding of the main body 62. As shown in Fig. 2A, a lens 64 is attached at the center of the front side of the main body 62, an optical viewfinder 66 by which a user confirms a photographing range and the like by visual checking and a flash 68, which emits fill light when photographing is executed under low light intensity, are attached above the lens 64 of the main body 62.

Moreover, on the main body 62, a power supply switch 70 is provided at the right side as viewed from the front and a shutter button 72 is equipped at the right side as viewed from the front. Furthermore, a slot 74 which can load a recording medium 58 is prepared on the right-side surface as viewed from the front of the main body 62. And, as shown in Fig. 2B, the color display 76 (a monochrome display may be applied) comprising a reflective display device or a transmission display device (for example, LCD) is attached at the lower side of the back of the main body 62, and a menu switch 78, an execution/view changing switch 80, and an operation switch 82 are attached above the display 76.

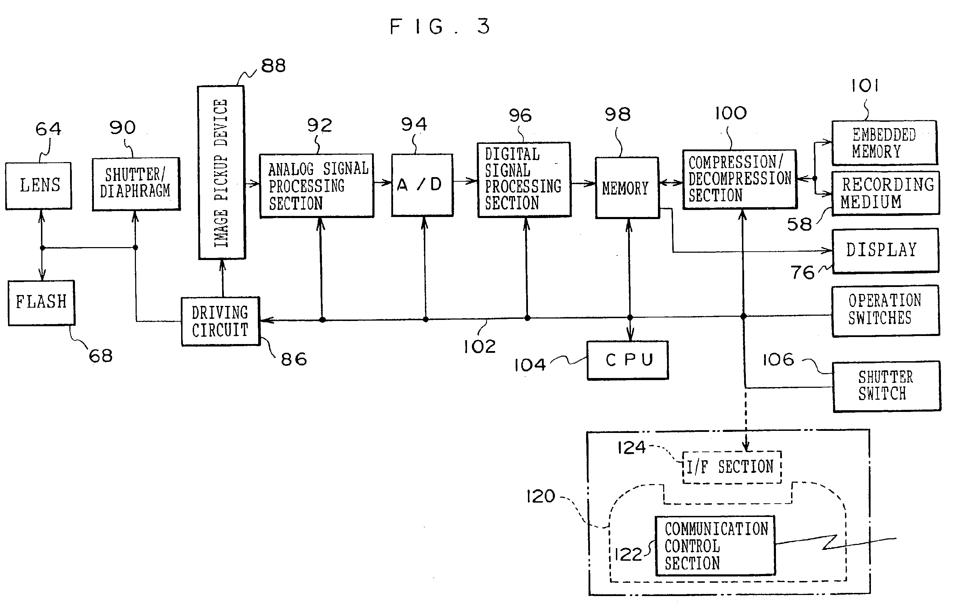

Fig. 3 shows a configuration of an electric system in DSC 60. The lens 64, more specifically, is a zoom lens (variable-focal-length lens) provided with an auto focus (AF) mechanism. The AF mechanism and the zoom mechanism of the lens 64 are driven by a driving circuit 86. Here, a fixed-focal-length lens provided only with the AF mechanism may be used as the lens 64, instead of the zoom lens.

An image pickup device 88, comprising an area CCD sensor and the like, is arranged at a position corresponding to a focal position of the lens 64 in the main body 62. The reflected light from the subject, which has entered the lens 64, is focused on a light receiving surface of the image pickup device 88. The image pickup device 88 is driven according to timing in synchronization with a timing signal which has been generated by a timing generating circuit (not shown) included in the driving circuit 86 and outputs an image signal (a signal indicating the amounts of light received at each of many pieces of photoelectric conversion cells which are arranged like a matrix on the light receiving surface).

A shutter/diaphragm 90 is arranged between the lens 64 and the image pickup device 88. The shutter/diaphragm is driven by the driving circuit 86. When the image signal is output from image pickup device 88, the shutter prevents generation of smear caused by light which enters the light receiving surface of the image pickup device 88 and it is possible to eliminate the shutter, depending on the image pickup device 88. Moreover, the diaphragm may be configured by a single diaphragm which can continuously change a size of aperture, or configured to switch a plurality of diaphragm with different sizes of apertures from each other. The flash 68 is also connected to the driving circuit 86. The flash 68 is controlled by the driving circuit 86 to emits light when it is detected that photographing is executed under low light intensity, or when emitting light is ordered by a photographer.

To a signal output terminal of the image pickup device 88, an analog signal processing section 92, an A/D (analog/digital) converter 94, a digital signal processing section 96, a memory 98 are connected one after another. The analog signal processing section 92 amplifies an image signal output from the image pickup device 88, and at the same time, performs correction of the amplified image signal, such as white balance. The image signal output from the analog signal processing section 92 is converted to a digital image data by the A/D converter 94 and input into the digital signal processing section 96. In the digital signal processing section 96, various kinds of processing such as color correction, γ correction, and Y/C conversion are executed for the input image data. The image data output from the digital signal processing section 96 is temporarily stored in the memory 98 comprising RAMs and the like.

The driving circuit 86, the analog signal processing section 92, the A/D converter 94, the digital signal processing section 96, the memory 98, and a compression/decompression section 100 (to be described later) are connected to a bus 102. A CPU 104 is connected to this bus 102 and at the same time, switches such as the power supply switch 70, the menu switch 78, the execution/view changing switch 80, and the operation switches 82 (in Fig. 3, denoted as "OPERATION SWITCHES") and a shutter switch 106, which is operated by the shutter button 72, are also connected to the bus 102, respectively.

Though not shown, CPU 104 comprises ROMs, RAMs, nonvolatile memories (memories, in which storage contents can be rewritten, such as EEPROM (electrically erasable programmable read-only memory)) and peripheral circuits such as I/O ports. And an operation information collection program by which operation-information collection processing to be described later is executed is written in ROM beforehand.

Furthermore, the display 76 and the compression/decompression section 100 are connected to the memory 98. When an image is displayed on the display 76, CPU 104 converts image data which has been temporarily stored in the memory 98 to image data for display on the display 76 as image-display processing and then, transfers the converted image data to the display 76. Thereby, an image which the image data which has been temporarily stored in the memory 98 represents is displayed on the display 76.

Also, the embedded nonvolatile memory 101 is connected to the compression/decompression section 100 and the recording medium 58 loaded in the slot 74 is also connected thereto. When writing of image data to the embedded memory 101 or to the recording medium 58 loaded in the slot 74 is directed by turning on the shutter switch 106 which is caused by operation of the shutter button 72, CPU 104 reads out the image data which has been temporarily stored in the memory 98 and transfers the read data to the compression/decompression section 100. Thereby, the image data is compressed in the compression/decompression section 100; predetermined information is added to the image data; and the data is written in the embedded memory 101 or the recording medium 58 as an image file in a predetermined format (for example, in an EXIF format).

Here, the number of pixels of the image data written in the embedded memory 101 or the recording medium 58 depends on a value set as a number of pixels for recording. Also, the compression rate of the image data depends on a mode which has been set as an image-quality mode beforehand, and in the case of some image-quality modes, image data is written in the embedded memory 101 or the recording medium 58 without being compressed. Moreover, the predetermined information which is added to image data for each of the images includes, for example, a file name, a model of DSC used for photographing, a photographed date, various kinds of information representing photographed conditions (setting of DSC) during photographing (for example, a shutter speed, a diaphragm value, an image-quality mode (compression rate of image data), a sensitivity, a mode of an exposure program, a photometric method, a white-balance mode, a focusing mode, a sharpness mode, a focus length, a corrected exposure value, an on-off state of the flash, a corrected flash value, an on-off state of a macro mode and the like), and the like.

Also, when reproduction (display) of an image written in the embedded memory 101 or the recording medium 58 loaded in the slot 74 is directed, the image data is read out from the embedded memory 101, or the recording medium 58. When the read image data has been compressed for storage, the compressed image data is expanded (decompressed) in the compression/decompression section 100 for temporary storage in the memory 98. Then, the image is displayed (reproduced) on the display 76 using the image data which has bee temporarily stored in the memory 98.

Then, in the first place, operation-information collection processing, which is executed by the CPU 104 of DSC 60, will be explained as an operation of the embodiment. Though the details of DSC 60 according to the embodiment will be described later, "total number of times photographing is carried out", "a number of selections of a photographing mode (a number of uses of each of photographing modes)", "a number of selections of a number of pixels at photographing", "a number of selections of an image quality mode", "a number of uses of a flash", "a number of selections of a flash mode (numbers of uses of each of flash emitting modes)", "a number of selections of a photographing magnification (number of uses of each photographing magnification)", "amount of time that a moving picture is photographed", "a number of selections of a continuous photographing mode (number of uses of a continuous photographing mode)", "total number of continuous photographing" (total number, of times photographing is carried out in continuous photographing mode), "a number of deletions of photograph data (number of deletions of image data)", "a number of data deletions of each photographing mode", "time for reproducing of a moving picture", "a number of times a battery is changed", and "a number of times a recording medium is loaded" are collected as operation information, which represents an operating state of DSC 60, in the operation-information collection processing. Storage areas in which the above pieces of operation information are stored are provided in the embedded memory 101, respectively.

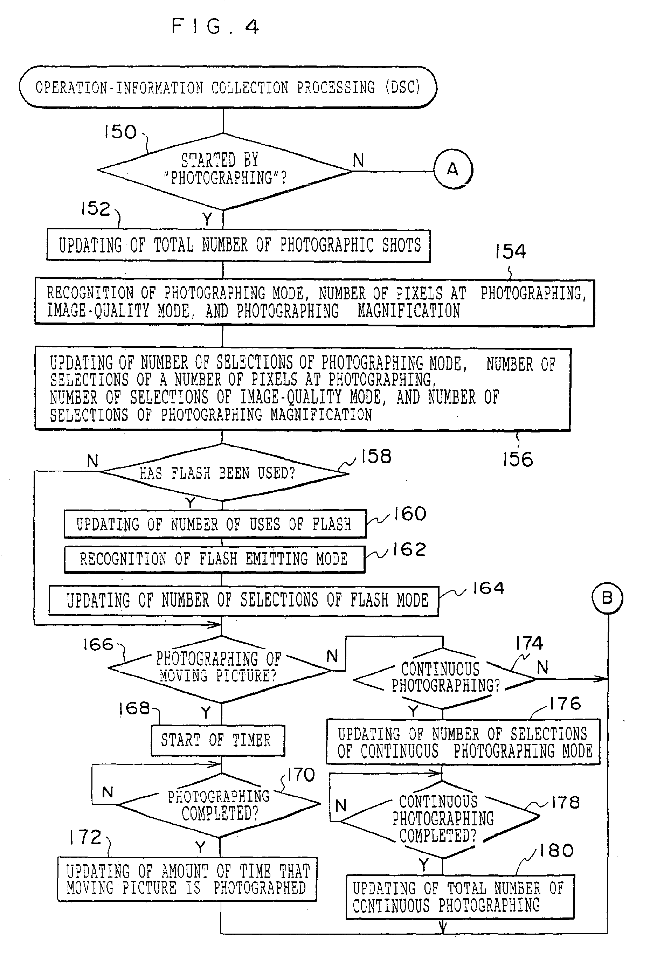

Then, CPU 104 of DSC 60 executes the operation-information collection processing shown in Fig. 4, whenever an event in which operation information which represents an operating state of DSC 60 is required to be collected (updated) occurs. Here, though the event in which operation information is required to be collected depends on the contents of the operation information to be collected, the operation-information collection processing is executed in the embodiment of the present invention when photographing is executed using DSC 60, when image data which has been written in the embedded memory 101 or the like by once photographing of a still picture with DSC 60 is deleted, when moving-picture data which has been stored in the embedded memory 101 and the like by photographing of a moving picture with DSC 60 is reproduced, when a battery in DSC 60 is changed, and when the recording medium 58 is loaded in the slot 74 of DSC 60.

In Fig. 4, it is judged at STEP 150 whether the current operation-information collection processing is started by photographing with DSC 60 or not. When the judgement at STEP 150 is YES, the processing proceeds to STEP 152, at which "total number of times photographing is carried out" among the operation information which has been stored in the embedded memory 101 is updated (increment by one). Subsequently, the following settings are recognized at STEP 154 for a photographing mode of the current photographing; a number of pixels at photographing; an image-quality mode, and a photographing magnification. Then, "a number of selections of a photographing mode"(a number of times a photographing mode is selected) , "a number of selections of a number of pixels at photographing", "a number of selections of an image quality mode", and "a number of selections of a photographing magnification" among operation information stored in the embedded memory 101 are updated at STEP 156, based on the recognition at STEP 154.

Here, "a number of selections of a photographing mode" is information for counting the number of uses of each photographing mode for each of the photographing modes provided in DSC 60, and "a number of selections of a photographing mode" is updated with only one increment of the number of uses corresponding to the photographing mode used for the current photographing. Moreover, even "a number of selections of a number of pixels at photographing", "a number of selections of an image quality mode", and "a number of selections of a photographing magnification" are similarly information for counting the number of uses for each of numbers of pixels for recording, each of image-quality modes, each of photographing magnifications (for example, each of divided ranges when a variable range for the photographing magnification is divided to plurality of ranges), all of which can be selected in DSC 60, and updating of the above pieces of information is also realized with only one increment of the corresponding number of uses.

Subsequently, it is judged at STEP 158 whether the flash has been used in the current photographing or not. When the judgement is NO, the processing proceeds to STEP 166 without any processing. When the judgement at STEP 158 is YES, the processing proceeds to STEP 160, at which "a number of uses of a flash" among the operation information stored in the embedded memory 101 is updated (increment by one) . And, setting of the flash emitting mode at the current photographing is recognized at STEP 162. Subsequently, "a number of selections of a flash mode" among the operation information stored in the embedded memory 101 is updated at STEP 164, based on the result of recognition at STEP 162, and then, the processing proceeds to STEP 166.

It is judged at STEP 166 whether the current photographing is moving-picture photographing or not. When the judgement is YES, the processing proceeds to STEP 168, at which a timer, which measures an amount of time that moving pictures are photographed, is started. Subsequently, it is judged at STEP 170 whether the moving-picture photographing has been completed or not. Step 170 is repeated till the judgement becomes YES. When the moving-picture photographing is completed, the judgement at STEP 170 becomes YES and the processing proceeds to STEP 172. Then, "an amount of time that moving pictures are photographed" among the operation information stored in the embedded memory 101 is updated by adding a timer value at a point when the judgement at STEP 170 is YES (an amount of time that the current moving picture is photographed) to "an amount of time that moving pictures are photographed" among the operation information stored in the embedded memory 101 and the processing proceeds to STEP 204.

On the other hand, when the judgement at STEP 166 is NO, the processing proceeds to STEP 174, at which it is judged whether the current photographing has been executed using the continuous photographing function of DSC 60 or not. When the judgement is NO, the processing proceeds to STEP 204 without any processing. When the judgement at STEP 174 is YES, the processing proceeds to STEP 176, at which "a number of uses of continuous photographing" among the operation information stored in the embedded memory 101 is updated (increment by one) . And, it is judged at STEP 178 whether the continuous photographing has been completed or not and the judgement at STEP 178 is repeated while the number of continuous photographing (number of photographing of each of the images) at the current photographing (continuous photographing) is counted.

When photographing using the continuous photographing function is completed, the judgement at STEP 178 becomes YES and the processing proceeds to STEP 180, at which "total number of uses of continuous photographing" among the operation information stored in the embedded memory 101 is updated by adding the number of continuous photographing at a point when the judgement at STEP 178 becomes YES to "total number of uses of continuous photographing", and then, the processing proceeds to STEP 204. Updating (collecting) of the operation information during photographing using DSC 60 is completed by STEPs 152 through 180 which have been described above.

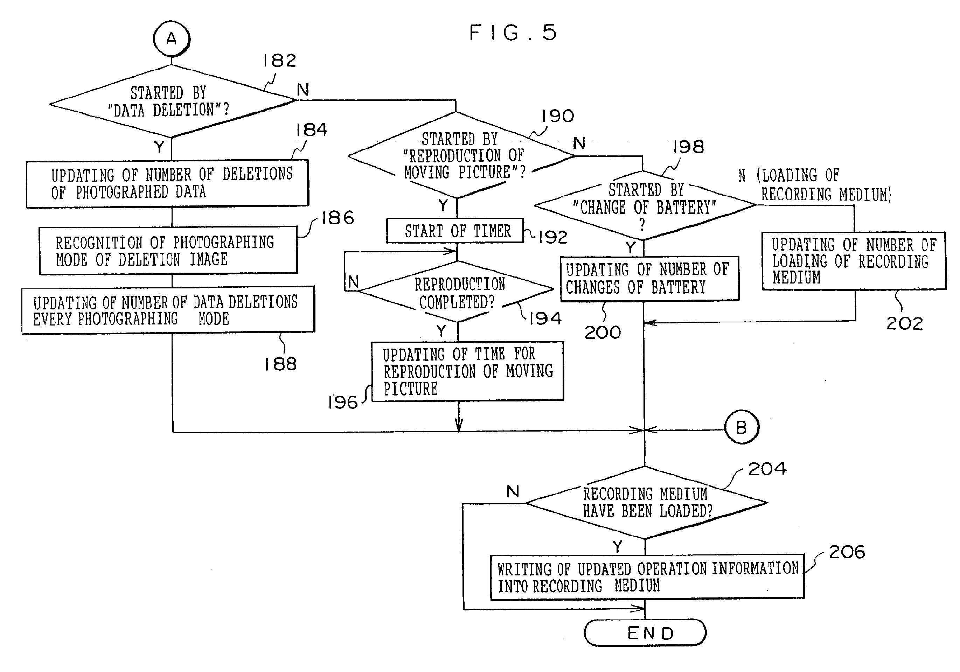

On the other hand, when the judgement at STEP 150 is NO, the processing proceeds to STEP 182 as shown in Fig. 5, at which it is judged whether the current starting of the operation-information collection processing is caused by deletion of image data which has been written in the embedded memory 101 by once photographing of a still picture with DSC 60. When the judgement at STEP 182 is YES, the processing proceeds to STEP 184, at which "a number of deletions of photograph data" among the operation information stored in the embedded memory 101 is updated (increment by one).

Subsequently, the photographing mode used for photographing is recognized at STEP 186 with regard to image data to be deleted. Recognition of the photographing mode is executed by referring to information which represents photographed conditions recorded in the same image file together with the image data to be deleted. Then, "a number of deletions of data for each photographing mode" among the operation information stored in the embedded memory 101 is updated at STEP 186, based on the recognition result of the photographing mode (the number of deletions corresponding to the recognized photographing mode is increased by one) , and then, the processing proceeds to STEP 204. Updating (collecting) of the operation information at deleting of image data in DSC 60 is completed by STEPS 184 through 188 which have been described above.

And, when the judgement at STEP 182 is NO, the processing proceeds to STEP 190, at which it is judged whether the current starting of the operation-information collection processing is caused by reproduction of moving-picture data which has been stored in the embedded memory 101. When the judgement at STEP 190 is YES, the processing proceeds to STEP 192, at which a timer ,which measures an amount of time that a moving picture is reproduced, is started. It is judged at STEP 194 whether reproduction of a moving picture has been completed or not and Step 194 is repeated till the judgement becomes YES.

When the reproduction of the moving picture is completed, the judgement at STEP 194 becomes YES and the processing proceeds to STEP 196, at which "an amount of time that a moving picture is reproduced" among the operation information stored in the embedded memory 101 is updated by adding a timer value at a point when the judgement at STEP 194 becomes YES (an amount of time that a current moving picture is reproduced) to "an amount of time that a moving picture is reproduced" and the processing proceeds to STEP 204. Updating (collecting) of the operation information regarding the reproduction of the moving picture in DSC 60 is completed by STEPs 192 through 196 which have been described above.

And, when the judgement at STEP 190 is NO, the processing proceeds to STEP 198, at which it is judged whether the current starting of the operation-information collection processing is caused by exchanging of a battery in the DSC 60. When the judgement at STEP 198 is YES, the processing proceeds to STEP 200, at which "a number of times a battery is changed" among the operation information stored in the embedded memory 101 is updated (increment by one) and at the same time, the change date of the battery is also recorded and then, the processing proceeds to STEP 204. Updating (collecting) of the operation information at exchanging of the battery in DSC 60 is completed by STEP 200 which have been described above.

And, since it can be judged that the current starting of the operation-information collection processing is caused by loading the recording medium 58 into the slot 74 in DSC 60 when the judgement at STEP 198 is NO, "number of times that a recording medium is loaded" among the operation information stored in the embedded memory 101 is updated (increment by one) at STEP 202 and the processing proceeds to STEP 204. Updating (collecting) of the operation information regarding loading of the recording medium 58 into DSC 60 is completed by STEP 202 which have been described above. STEPS 150 through 202 which have been described above are corresponding to a first collection section according to claim 1 (more specifically, a first collection section according to claim 2).

When updating (collecting) of the operation information (collection) is completed, it is judged at STEP 204 whether the recording medium 58 has been loaded into the slot 74. When the judgement at 204 is NO, the operation-information collection processing is completed (in this case, the updated operation information is configured to be preserved in the embedded memory 101) without any processing. When the judgement at 204 is YES, the processing proceeds to STEP 206 and all pieces of the operation information stored in the embedded memory 101 are written into, for example, the recording medium 58 in a format as shown in the following Table 1 (when the previous operation information has been already written in the medium, all pieces of the above information are overwritten into the previous operation information which has been written) . STEP 206 which has been described is corresponding to the processing section according to claim 1 (more specifically, a processing section according to claim 3).

**Table 1**

| <One example of recording format in the recording medium> | | | | | | |
|---|---|---|---|---|---|---|
| DSCDATA | | | | | | |
| | DCIM | | | | | |
| | | 100_FUJI | | Size | Type | Update date |
| | | | DSCF0109 | 289 kB | EXIF | 2000/8/15 10:43 |
| | | | DSCF0110 | 290 kB | EXIF | 2000/8/15 10:45 |
| | | | DSCF0111 | 291 kB | EXIF | 2000/8/15 11:43 |
| | | | DSCF0112 | 292 kB | EXIF | 2000/8/15 12:01 |
| | | | DSCF0113 | 293 kB | EXIF | 2000/8/15 13:15 |
| | | | DSCF0114 | 294 kB | EXIF | 2000/8/1513:20 |
| | | | DSCF0115 | 295 kB | EXIF | 2000/8/21 10:43 |
| | | | DSCF0116 | 296 kB | EXIF | 2000/8/21 10:44 |
| | | | DSCF0117 | 297 kB | EXIF | 2000/8/21 11:10 |
| | | | DSCF0118 | 298 kB | EXIF | 2000/8/21 11:40 |
| | | | DSCF0119 | 299 kB | EXIF | 2000/8/21 12:43 |
| | | | DSCF0120 | 300 kB | EXIF | 2000/8/2610:43 |
| | | | DSCF0121 | 301 kB | EXIF | 2000/8/2610:45 |
| | | | | | | |

| | | 100_FUJI HIS | Operation-history file | Size | Type | Update date |
|---|---|---|---|---|---|---|
| | | | Total number of photographing | 0.5 kB | CSV | 2000/8/26 10:45 |
| | | | Number of selections of photographing mode | 0.5 kB | CSV | 2000/8/26 10:45 |
| | | | Number of selections of a number of pixels at photographing | 0.5 kB | CSV | 2000/8/26 10:45 |
| | | | Number of selections of image-quality mode | 0.5 kB | CSV | 2000/8/26 10:45 |
| | | | Number of uses of flash | 0.5 kB | CSV | 2000/8/26 10:45 |
| | | | Number of selections of flash mode | 0.5 kB | CSV | 2000/8/26 10:45 |
| | | | Number of selections of photographing Number magnification | 0.5 kB | CSV | 2000/8/26 10:45 |
| | | | Amount of time that moving picture is photographed | 0.5 kB | CSV | 2000/8/26 10:45 |
| | | | Number of selections of continuous photographing mode | 0.5 kB | CSV | 2000/8/26 10:45 |
| | | | Total number of continuous photographing | 0.5 kB | CSV | 2000/8/26 10:45 |
| | | | Number of deletions of photograph data | 0.5 kB | CSV | 2000/8/26 10:45 |
| | | | Time for reproducing of moving picture | 0.5 kB | CSV | 2000/8/26 10:45 |
| | | | Number of changes of battery | 0.5 kB | CSV | 2000/8/2610:45 |
| | | | Number of loading of recording medium | 0.5 kB | CSV | 200018126 10:45 |
| | | | Repair history | 0.5 kB | CSV | 1999/9/26 17:45 |
| | | | | | | |

| | | 100_FUJIDEL | Deletion history file | Size | Type | Update date |
|---|---|---|---|---|---|---|
| | | | DD01 | 0.5 kB | CSV | 2000/8/15 11:43 |
| | | | DD02 | 0.5 kB | CSV | 2000/8/1513:15 |
| | | | DD03 | 0.6 kB | CSV | 2000/8/15 11:10 |
| | | | DD04 | 0.7 kB | CSV | 2000/8/26 10:45 |

Here, in the format shown in Table 1, each file in a directory "DSCDATA¥DCIM¥100_FUJI¥" is an image file in which predetermined information is added to image data, various kinds of operation information are stored in a directory "DSCDATA¥DCIM¥100_FUJI HIS¥" as a movement history file ("a number of deletions of data for each photographing mode" is included in "a number of deletions of photograph data") . Also, a deletion history file is configured in the format of Table 1, to be recorded in a directory "DSCDATA¥DCIM¥100_FUJI DEL¥" whenever image data is deleted.

And, "Repair history" is information written in the embedded memory 101 of DSC 60 when a customer having DSC 60 in failure requests a camera manufacturer 18 for repairing of the DSC 60 and the camera manufacturer 18 repairs DSC 60, depending on the request. "Repair history" comprises information indicating a repaired part and a repaired date. In the above-described operation-information collection processing, the operation information and "Repair history" which has been described are simultaneously written into the recording medium 58.

Subsequently, usage of the above-described operation information in the photographic processing system 10 will be explained. When photographic processing of an image photographed by using DSC 60 according to the embodiment is requested in the first requesting form, a recording medium 58 in which an image file and operation information have been recorded is brought into a DPE-request accepting shop 12 by the customer. The operation information is configured to be delivered from the customer to the photographic processing system 10 by reading the image file and the operation information from the recording medium 58, which has been received from the customer, using the media drive 22, in the DPE-request accepting shop 12.

Moreover, When photographic processing of an image photographed by using DSC 60 is requested in the second requesting form, an image file and operation information once recorded in the recording medium 58 are read using a PC owned by a customer and the like. The read image file and the operation information are transmitted to a DPE-request accepting shop 12 through a computer network such as the Internet. The operation information is configured to be delivered from the customer to the photographic processing system 10 by receiving the above information using the computer 20 in the DPE-request accepting shop 12.

On the other hand, each of the customers are identified and managed by the customer number in the photographic processing system 10. In the DPE-request accepting shop 12, information on a requested date, the contents of requested photographic processing, and a requested quantity are input to the computer 20, whenever photographic processing is requested by a customer, and accumulated and stored as customer information in the HDD of the computer 20 in association with the customer number. Here, it is preferable that the customer number is recorded in a card-type recording medium (for example, a magnetic card, an IC card and the like), which is owned by the customer and presented when photographic processing is requested, and is read out from the above recording medium.

And, when photographic processing is requested from a customer according to the first requesting form or the second requesting form, a photographed image is configured to be delivered from the customer as an image file in the EXIF form or other forms. In the DPE-request accepting shop 12, when photographic processing is requested from the customer in the first requesting form or the second requesting form and operation information is simultaneously received, information on the model of DSC used during photographing and the like is read from the image file in the EXIF format, which file has been delivered from the customer by the computer 20, the model information representing the read model of DSC and the customer number are added to the operation information delivered from the customer for transmission to the computer 44 at the data center 16.

Incidentally, when photographic processing of images, which have been photographed by using the same DSC 60 and are different from each other, is requested by a customer at different times, the latest operation information at the time of requesting is delivered from the customer at each time photographic processing is requested. Thereby, whenever the computer 44 receives the operation information from the DPE-request accepting shop 12, it is searched in the data center 16 using the customer number and the model information added to the received operation information as a key, whether the operation information associated with the same customer number and model information has been stored in the photograph-related information DB 48 in the storage device 46 . Then, when relevant operation information is extracted by the above searching, the relevant operation information is overwritten by the received operation information for storing the received operation information in the photograph-related information DB 48. And, when the relevant operation information has not been present, the received operation information is configured to be stored in the photograph-related information DB 48 in association with the customer number and the model information.

Since the data center 16 is connected to DPE-request accepting shops 12 at various places through the communication network 50, operation information is configured to be transmitted to the data center 16 whenever photographic processing of an image photographed with DSC 60 is requested to any one of the DPE-request accepting shops 12 at various places. By the above-described processing, the latest operation information (the operation information transmitted at the end) for each customer and each DSC 60 is configured to be stored in the photograph-related information DB 48 in the storage device 46 of the data center 16. Here, as described above, the computer 20 in the DPE-request accepting shops 12, the computer 44 and the storage device 46 in the data center 16 function as a second collection section according to claim 5.

Incidentally, when the edited image data to be described later is written back into the recording medium 58 after a recording medium 58 in which an image file and operation information are recorded by DSC 60 is taken out of DSC 60, the image data is loaded into PC from the recording medium 58, and the image data is edited on PC, it is preferable not to preserve in the data center 16 the operation information recorded in the recording medium 58 for the operation information is not reliable. Unreliable operation can be distinguished by, for example, the following methods.

That is, it can be judged that the operation information has no reliability, for example, when there is no continuity among updated dates (photographed dates) of the image file recorded in the recording medium 58 (a case in which the updated dates are not in the order, or other cases), since recording of the image file to the recording medium 58 is sequentially executed in the order of photographing.

Furthermore, it can be judged that the operation information has no reliability when the file name of the image file, which name is recorded, for example, in the recording medium 58, has no regularity, for it is general that a file name of the image file recorded in the recording medium 58, for example, characters and numerical values included in the file name are automatically generated, for example, by sequential and mechanical increment in DSC 20.

And, when image data in an image file recorded in the recording medium 58 once is deleted, photographing information which has been included in the same image file as the deleted image data is configured to remain in the recording medium 58. It can be judged that the operation information has no reliability, when the updated date of this photographing information is quite different from that of adjacent image files.

Moreover, since the updated date of the operation information recorded in the recording medium 58 is required to be in accordance with the updated date of the image file which has been photographed lastly, or the updated date of the deletion history file, in the recording format shown in Table 1, it can be judged that the operation information has not reliability when the above-described updated dates are different from each other.

On the other hand, computers 52 of each of camera manufacturers 18 request transmission of operation information to the computer 44 of the data center 16 at a predetermined timing (for example, everyday, every several days, every one month and the like). Thereby, the computer 44 at the data center 16 recognizes the models of DSCs 60 which are manufactured by the camera manufacturers 18 of the transmission request sources, reads out all the operation information, which is stored in the photograph-related information DB 48 in association with model information representing the recognized model, and the read operation information is transmitted to the computers 52 of the camera manufacturers 18 of the transmission request sources together with the customer numbers and the models, respectively.

At each of the camera manufacturers 18 who have received operation information, the received operation information for each model is tabulated by the computers 52, respectively. As described above, the computers 52 of the camera manufacturers 18 function as a tabulation section according to claim 5. Then, the operation information tabulated for each model is used for improvement of the present DSC which are being manufactured, or a new model (a next generation model) of apparatus which is under development by each of the manufacturers 18. The use of the tabulated operation information for each model is corresponding to the invention according to claim 6.

Specifically, for example, the following information are useful for design of movable components (in order to judge how much durability is required and the like): "total number of times photographing is carried out"; whether information representing that the movable components near the shutter have been repaired is included in "repair history" or not; and when the above-described movable components were repaired. Accordingly, a use state (or, frequency of use) of DSC of the specific model is determined, based on the tabulated results (for example, average values) of "total number of times that photographing is carried out" for a specific model of DSC. The durability of the above-described movable components in DSC is determined for each model, based on information included in "repair history". Thus, when DSC of the specific model is improved or DSC of the next generation is developed, the above-described movable components can be designed, based on the results of the above-described determinations, so that there are caused no failures in the above described movable components within a predetermined warranty period or the like and the customer satisfaction is increased.

Furthermore, for example, the following information are useful for design of the components related to the flash (how much durability is required and the like): "a number of uses of a flash"; whether information representing that components related to the flash have been repaired is included in "repair history" or not; and when the above-described components were repaired. Thereby, a use state (or, frequency of use) of DSC of the specific model is determined, based on the tabulated results (for example, average values) of "a number of uses of a flash", for a specific model of DSC. The durability of the components related to the flash in DSC is judged for each model, based on information included in "repair history". Thus, when DSC of the specific model is improved or DSC of the next generation is developed, the above-described components related to the flash can be designed, based on the results of the above-described determinations, so that there are caused no failures in the components related to the flash within a predetermined warranty period or the like and the customer satisfaction is increased.

And, for example, "a number of times a recording medium is loaded" is useful information for designing of components related to the slot 74 (what degree of durability is required at designing and the like) , because it is correlated highly with degree of wear-out of components related to the slot 74, more specifically, components in contact with the recording medium 58. Thereby, it can be determined by tabulating (for example, average values are calculated) "a number of times a recording medium is loaded" for a specific model of DSC, how often customers load and eject the recording medium 58. Thus, when the specific model of DSC is improved, or when DSC of the next generation is developed, the above-described components related to the slot 74 can be designed, based on the results of the above-described determinations. As a result, there are occurred no inconvenience (for example, reading/writing of data can not be executed, and there are caused frequent errors at reading/writing) caused by wear of components in contact with the recording medium 58 within a predetermined durability (so that the customer satisfaction is increased).

Moreover, though high-capacity batteries are installed in DSC which has large electric power consumption in comparison with an ordinary camera using silver salt photographic film, the high-capacity batteries are very disadvantageous to design the smaller and lighter DSC. The optimum capacity of the batteries is very important for DSC requiring the smaller size and the lighter weight, and "a number of times a battery is changed" and the changed date of the batteries included in the information are useful information for designing the capacity of batteries and the like. Therefore, a total number of photographic shots, accumulated time for display of an image on the display 76, and a number of uses of the flash for a period till the battery is changed, based on the changed date of the battery, are recognized for each of the DSCs of the specific model. Moreover, by tabulating (for example, average values are calculated) a number of times a battery is changed, and a total number of photographic shots, accumulated time for display of an image on the display 76 and a number of uses of the flash for a period till the battery is changed, for each of DSCs of the specific model, it can be judged, based on the tabulated results, whether the performance which was designed at the beginning is realized or not, and when DSC of the specific model is improved or DSC of the next generation is developed, the battery can be designed so that the capacity of the battery is optimized.

And, for example, "a number of selections of a photographing mode", "a number of selections of a number of pixels at photographing", "a number of selections of an image quality mode", and "a number of selections of a flash mode" are information useful for decision of priority and the like for various kinds of setting of a photographing mode, a number of pixels at photographing, an image quality mode, a flash mode and the like. Thereby, "a number of selections of a photographing mode", "a number of selections of a number of pixels at photographing", "a number of selections of an image quality mode", and "a number of selections of a flash mode" are tabulated (average values for, for example, a selection frequency for each photographing mode, a selection frequency for pixels at photographing every set value, a selection frequency for each image-quality mode, and a selection frequency for each flash mode are calculated, respectively) for DSC of the specific type. When the specific model of DSC is improved or DSC of the next generation is developed, default values for the photographing mode, the number of pixels at photographing, the image-quality mode, and the flash mode can be decided based on the tabulated results. More specifically, the photographing mode, the number of pixels at photographing, the image-quality mode, and the flash mode, which have the highest selection frequency at power-on and at use of the flash of DSC, are set as a default value automatically. Thereby, the operability of DSC can be improved and the customer satisfaction can be increased.

Here, the tabulated results of selection frequencies for each photographing mode can be used not only for decision of a default value for the photographing mode, as described above, but also for a case where parameter settings for "AUTO mode" are changed in accordance with a photographing mode with the highest selection frequency, excluding "AUTO mode".

Furthermore, for example, "a number of selections of a photographing magnification" is information useful for decision of a variable range for the photographing magnification of DSC. Accordingly, "a number of selections of a photographing magnification" is tabulated (average values for selection frequencies is calculated for each divided range when the variable range for the photographing magnification of DSC is divided into plurality of ranges), and when DSC of the specific model is improved or DSC of the next generation is developed, the variable range for the photographing magnification can be changed according to the tabulated results (for example, when the selection frequency is higher at the wide-angle side within the variable range for the photographing magnification, designing is changed, for example, so that the variable range for the optical magnification is biased to the wide-angle side (from 35 mm to 28 mm as one example) and the telephoto side is covered by digital zooming). Thereby, the optimum variable range for the photographing magnification of DSC can be realized and the customer satisfaction can be increased.

In addition, since, when image data which has been obtained by photographing once is deleted by a customer, there is in most cases a reason, for example, that the customer is discontent with the image quality of an image represented by the deleted image data, "a number of deletions of photograph data" is a very important information by which the customer satisfaction (degree of discontent) can be analyzed in detail by combination of other operation information. Hereinafter, combination use of "a number of deletions of photograph data" and other operation information will be explained, referring to one example of the tabulated results of the operation information.

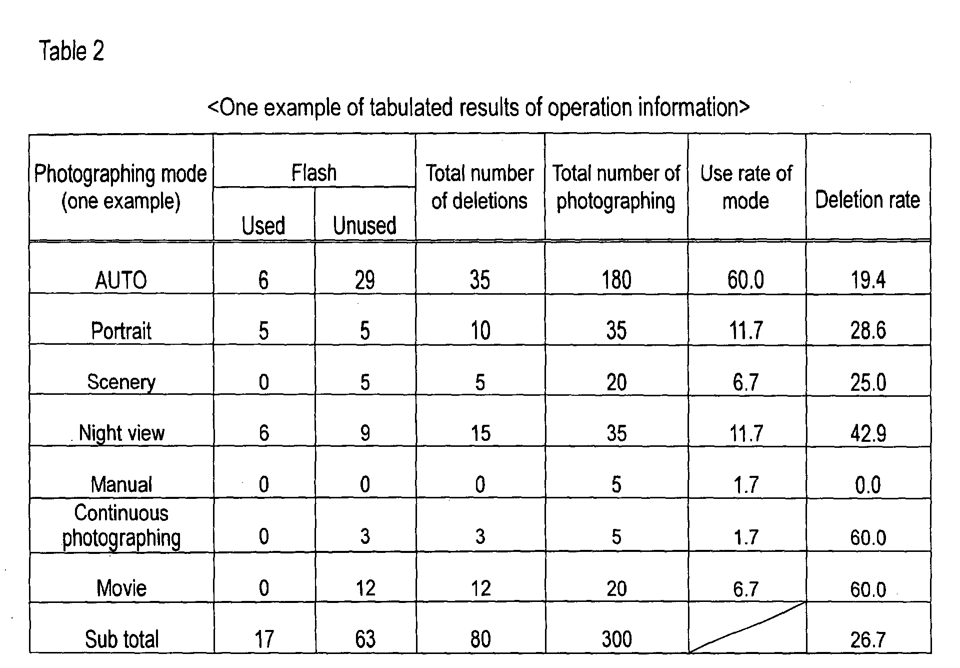

Table 2 shows one example of the tabulated results of the operation information, based on 300 shots in total which 30 customers photographed using DSC of the same model. According to the tabulated results in Table 2, in the total number of "300 times" of photographing, "AUTO mode" has the highest selection rate as the selected photographing mode (use rate of mode) and occupies 60% of the whole, "portrait mode" and "night view mode" have the second highest selection rate of 11.7%, and "scenery mode" and "movie (animation photographing) mode" have the third selection rate of 6.7%. Thus, a general use tendency of DSC of the model can be seen.

Moreover, the data-deletion rate is 26.7% as a average value, and data is deleted once every about four times of photographing. It is seen that, with regard to the data deletion rate for each photographing mode, the deletion rate of 28.6% for "portrait mode", that of 42.9% for "night view mode", and those of 60%" for "continuous photographing mode" and "movie mode" exceed the average, and on the other hand, the data deletion rate for "manual mode" is 0%.

From the above results, for example, the data deletion rates for "'night view mode", "continuous photographing mode", and "movie mode" are as high as between 40% and 60%. Accordingly, it can be judged that a customer will not fully accept the above modes (here, it can be judged, making combined use of "photographed time for moving pictures" and "time for reproducing a moving picture", whether "movie mode" is accepted or not by a customer, and it can be judged, making combined use of "a number of selections of a continuous photographing mode" and "total number of continuous photographing", whether "continuous mode" is accepted or not by a customer.) Moreover, it can be analyzed that, higher data-deletion rate of "movie mode" may be caused by, for example, poorer image quality and shorter possible amount of time for photographing in comparison with those of a digital video camera.

Moreover, with regard to "night view mode", it can be judged that improvements of the DSC side, such as improvements in the photographed image quality, are required, for the total number of photographing is 35, the total number of data deletions is as many as 15, and the use frequency is high. Therefore, the above mode can be listed as an item to be improved when minor changes in DSC of the model is executed so that the customer satisfaction is increased.

Furthermore, with regard to photographing modes with a high data deletion rate, the total number of photographing for "night view mode" is 35, the total number of photographing for "movie mode" is 20, and on the other hand, the total number of photographing for "continuous photographing mode" is 5 and the use frequency for "continuous photographing mode" is low. Accordingly, it can be judged that the existence of the continuous photographing mode itself is not popular among may customers, or that it is difficult to operate the "continuous photographing mode", and then, a measure such as improvement in an operation manual for DSC so that "continuous photographing" is widely recognized, or study for improvement in the operability of "continuous photographing" can be realized. In addition, since the use frequency of "continuous photographing mode" is low, there is a possibility that cost reduction can be achieved by not loading "continuous photographing mode" without remarkable reduction in the customer satisfaction, for example, when a new model of DSC with low cost is developed. As seen from the above, it is possible to make the best use of the above possibility when a new model of DSC is developed.

On the other hand, with regard to "manual mode" , the total number of photographing is as low as 5, but the data deletion rate is 0%. Accordingly, it can be judged according to an analysis that a part of customers have accepted the mode, and there is a possibility that the customer satisfaction is increased, for example, by improvement in the operation manual for DSC or further improvement in the operability of "manual mode" so that "manual mode" is widely recognized among customers.

Subsequently, Table 3 shows tabulation results of operation information on DSC of a different type from that of the above-described Table 2.

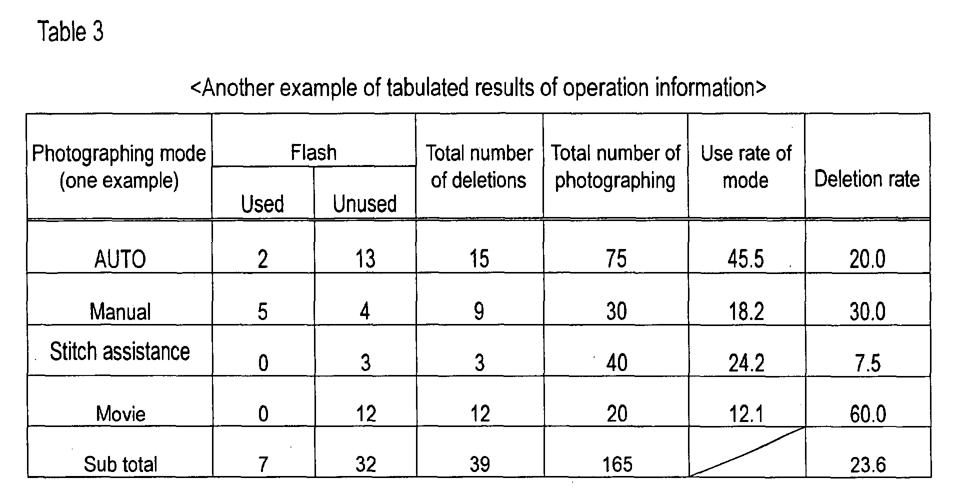

A small and high-efficient light-guide-type flash with a more increased amount of light than that of a conventional one is installed in DSC corresponding to the tabulated results of operation information shown in Table 3. And, in comparison of the tabulated results shown in Table 3 with those shown in Table 2, the number of data deletions at use of the flash is smaller than that of the tabulated results in Table 2 and then, it can be seen that the data deletion rate at use of the flash is lower than that of the tabulated results in Table 2 . Thereby, it can be judged that the tabulated results means that images which have been conventionally deleted for a main subject is photographed as a darker image have become images without the darker image by use of a high-efficient light-guide-type flash, and it is possible to interpret that the customer satisfaction is increased by improved performance of the flash.

However, the data deletion rate for "manual mode" among the tabulated results in Table 3 has a more increased rate than that in the tabulated results in Table 2. Thereby, when DSC corresponding to the tabulated results in Table 3 is improved, or the next generation model of DSC is developed, it becomes possible to execute a strategic analysis for improvement in the customer satisfaction. For example, it is preferable to give priority to improvement in the operability and the performance of "manual mode", according to the analysis.

Here, the tabulated results of operation information can be used by camera manufacturers 18 not only for the above-described uses, but also for planning of storage dates of periodic replacement components and a production plan for periodic replacement components of DSC.

Also, operation information transferred from the data center 16 (operation information for each of DSCs 60) is tabulated for each model as described above and the tabulated results are analyzed in the camera manufacturers 18 for improvement in DSC and for development of a next generation DSC. Furthermore, it maybe also configured to give a customer advice for change or maintenance of components of DSC and that for photographing operation, based on the results of the analysis of analysis of each DSC 60 as a unit without tabulating for each model. Advices given as described above correspond to the invention according to claim 7.

Specifically, when it is found, for example, by analysis of operation information on a specific DSC 60 that change date of an internal battery in the specific DSC 60 approaches (for example, the number of electrical charging and discharging of a battery is approaching to the designed value, a time interval for charging becomes shorter, and the like), advice information which represents advice given to a customer for change of a battery is generated by the computer 52 in a camera manufacturer 18 and transferred to the processing laboratory 14 together with information on the customer number and the like through the communication network 52. Here, for example, "The number of uses of a battery of your camera is approaching the standard number of uses. We recommend you to change it to a new one if you feel under use that the interval till charging becomes shorter. The type of the latest battery corresponding to your camera is XXX. Please get it at the nearest shop. " and the like can be used as the above-described advice.

When the advice information is received from the camera manufacturer 18, the processing laboratory 14 prints as advice memorandum advice which represents the received advice information using the printer 42, and at the same time, judges, based on information on the customer number and the like which has been received together with the advice information, a customer to which the printed advice memorandum is required to be given. Subsequently, the laboratory 14 enters photographic prints, which have been made according to a request from the customer, into a DPE envelope to contain photographic prints together with the advice memorandum and ships the envelope to the DPE-request accepting shop 12. Thereby, the advice which the advice information generated in the camera manufacturer 18 represents is provided to the relevant customer to improve the service level to the customer.

Also, logs of errors occurred in each DSC may be included in the operation information as information, but, when it is found, for example, by analysis of operation information on the specific DSC 60 that data writing errors to the recording medium 58 frequently occurs in the specific DSC 60, advice information to recommend the customer to maintenance DSC 60 is generated in the camera manufacturer 18 using the computer 52. For example, "Now, writing errors to the memory used in your camera occurred several times. For confirmation, you are recommended to clean it with a cloth and the like once. Please consult a clerk at the nearest shop when you have unknowns" and the like can be used as the above-described advice. Advice information representing advice is also transmitted to the laboratory 14 in a similar manner to that of the above described example, and the information is printed as advice memorandum and is provided to a customer in a DPE envelope.

Also, when it is found, for example, by analysis of operation information on a specific DSC 60 that a customer executes photographing with the specific DSC 60 in an inappropriate photographing mode without changing the mode according to subjects, advice information representing advice on photographing operation to the customer is generated using the computer 52, in a camera manufacturer 18 . For example, when the photographing mode is not changed from a night view mode, "All images which you photographed with your camera have used the night view mode. Please confirm the mode changeover switch again. Please consult a clerk at the nearest shop when you have unknowns" and the like can be used as the above-described advice. Advice information representing advice is also transmitted to the laboratory 14 in a similar manner to that of the above described example, and the information is printed as advice memorandum and is provided to a customer in a DPE envelope.

Here, as described above, upgrading of a program installed in DSC 60 (for example, correction of bugs and addition of functions in a program, change of a parameter setting for "auto mode" and the like, and change in the allotment of processing (games may be applied) to be executed at pushing a specific button) can be realized by establishment of a route from a camera manufacturer 18 to a customer through the processing laboratory 14, and the DPE-request accepting shop 12. For example, upgrading of programs installed in DSC 60 can be easily realized by writing upgraded programs in a recording medium 58 of a customer under keeping together with an installer beforehand and by giving the medium to the customer together with a memorandum describing a message saying "Please insert a recording medium to your camera and automatic upgrading is executed. Please consult a clerk at the nearest shop when you have unknowns" and the like.

Here, though an aspect according to which the operation information is recorded in the recording medium 58 together with the image data, is read from the recording medium 58 at the DPE-request accepting shop 12, and is transferred to the data center 16 has been explained in the above-described case, the invention is not limited to the above aspect. Though, for example, some photography apparatuses such as DSC are provided with a charging pedestal with a charging function by which a battery (secondary battery) of the photography apparatus is charged by mounting the apparatus on the pedestal, a configuration, as shown in Fig.3 with dashed lines as an example, in which, instead of the above charging pedestal, a cradle 120 (also refer to Fig. 1) having the above-described charging function and installing a communication control section 122 which executes communication (for example, wireless communication) with other computers through the communication network 50 is attached; an I/F section 124 which performs transmitting or receiving of data between the communication control section 122 and CPU 104 is provided in the side of DSC 60; and the operation information, independent from the image data, is transferred from DSC 60 to the data center 16 through the cradle 120 and the communication network 50, maybe applied.

According to the above-described aspect, direct transmission of information to DSC 60 can be realized by recognizing, in the side of the camera manufacturer 18 (or, the data center 16), of an address of DSC 60 (for example, the IP (Internet Protocol) address, which is given to DSC 60, according to IPV6 (Internet Protocol Version 6)) (the above processing is corresponding to the processing section according to claim 4) . For example, according to the above-described aspect, the cradle 120 can record the number of charging of an internal battery of DSC 60 and can transfer the recorded number to the outside (the data center 16 and the camera manufacturers 18) as operation information. Accordingly, since the side of the camera manufacturers 18 (or the data center 16) judge the change date of an internal battery of DSC 60, based on the transferred number of charging and transmit the judged results to the cradle 120, it becomes possible to notify the change date of the internal battery of DSC 60 to the customer through the cradle 120.

Moreover, though an aspect according to which the operation information is collected and tabulated, and the tabulated results of the operation results is used for improvement of DSC and for development of a next generation model of DSC has been explained as one example, the invention is not limited to the above aspect. For example, a configuration in which an image file in the EXIF format includes, in addition to image data, a file name, a model of DSC used for photographing, a photographed date, various kinds of information (setting of DSC) representing photographed conditions at photographing (for example, a shutter speed, a diaphragm value, an image-quality mode (compression rate of image data), a sensitivity, a mode of an exposure program, a photometric method, a white-balance mode, a focusing mode, a sharpness mode, a focus length, a corrected exposure value, an on-off state of the flash, a corrected flash value, an on-off state of a macro mode and the like), and the like for each photographed image, the above-described photographing information, excluding information such as "a number of deletions of photograph data", included in the image file in the EXIF format or another format is collected and tabulated, and the tabulated results of the photographing information is used for improvement of DSC and for development of a next generation of DSC, may be applied.

And, though an aspect according to which the computer 20 in the DPE-request accepting shop 12, the computer 44 and the storage device 46 in the data center 16 function as a second collection section according to claim 5, and the computer 52 in the camera manufacturers 18 functions as a second collection section according to claim 5 has been explained, the invention is not limited to the above aspect. A configuration in which a function as a information tabulating device disclosed in claim 5 is realized by a single computer can be applied.

Moreover, although examples were described above where each of the DSCs is identified based on the customer number and the model information of the DSC, the invention is not limited thereto. For example, photography apparatuses such as DSCs are identified based on the identification information assigned to each of the photography apparatuses in order to identify each photography apparatus. The identification information may be engraved on the case of the photography apparatuses, or may be printed on the sticker adhered on the case of the photography apparatuses. Furthermore, the identification information may be written in the non-volatile memory, such as ROM, EEPROM, or the like, embedded in the photography apparatus. In this case, the photography apparatus may have a function that the identification information read out from the non-volatile memory is written in the recording media together with the image data. Thus, the identification information is obtained via the recording media, and the photography apparatus, which photographed the subject and wrote the image data to the recording media, is identified based on the obtained identification information. This embodiment has an advantage that each of the plurality of photography apparatus of the same model is identified even if a customer have the plurality of photography apparatus of the same model.

Since, as explained above, the photography apparatus according to the invention executes processing by which operation information which represents an operating state of the photography apparatus is collected and the collected operation information is transferred to the information tabulating device which tabulates the operation information, the invention has an excellent advantage that it is possible to increase the satisfaction of a customer who uses the photography apparatus.

Moreover, since the information tabulation device according to the invention performs at least one of collection of operation information from each of the above plurality of photography apparatuses and collection of photographing information representing photographed conditions at photographing from each of the above plurality of photography apparatuses, and the collected operation information or photographing information is tabulated for each model of the photography apparatus, the invention has an excellent advantage that it is possible to increase the satisfaction of a customer who uses the photography apparatus.

Furthermore, since, in the method of utilizing tabulated information according to the invention, at least one of the suitability of the performance with which the photography apparatus is provided, the suitability of the functions with which the photography apparatus is provided, and the durability of the photography apparatus is analyzed for each model of the photography apparatus, based on information which has been tabulated for each model of the photography apparatus using the above information tabulating device, and the results of the analysis are reflected on the design of the photography apparatus, the invention has an excellent advantage that it is possible to increase the satisfaction level of a customer who uses the photography apparatus.

## Claims

1. A photography apparatus which operates according to operation thereof by a customer, the photography apparatus comprising:
a first collection section which collects operation information representing an operating state of the photography apparatus; and
a processing section which carries out processing for transferring operation information collected by the first collectionsection to an information tabulating device which tabulates the operation information.

2. A photography apparatus according to claim 1, wherein the operation information is at least one of a number of uses of each of the functions, an amount of time that each of the functions is used, and a repair history of components in the photography apparatus which respectively achieve the functions.

3. A photography apparatus according to claim 1,
wherein:
the photography apparatus is provided with a function by which a subject is photographed and image data obtained by the photographing is recorded in an information storage medium; and
the first collection section collects, as the operation information, at least one of: a number of times photographing is carried out; numbers of uses of each of various kinds of photographing modes; a number of uses of a flash; numbers of uses of each of various kinds of flash emitting modes; numbers of uses of each of photographing magnifications during photographing; an amount of time that a moving picture is photographed; an amount of time that a photographed moving picture is reproduced; a number of uses of a continuous photographing mode; a total number of times photographing is carried out in continuous photographing mode; a number of deletions of image data; numbers of deletions of image data for each of various kinds of photographing modes; a number of times a battery is changed; and a number of times an information storage medium is loaded into the photography apparatus.

4. A photography apparatus according to claim 1, wherein:
the photography apparatus is provided with a function by which a subject is photographed and image data obtained by the photographing is recorded in an information storage medium; and
the processing section executes, as the processing for transferring the operation information to the information tabulating device, processing by which the operation information is recorded in the information storage medium.

5. A photography apparatus according to claim 1, further comprising a communication section which can communicate with the information tabulating device through a communication line, wherein the processing section executes, as the processing for transferring the operation information to the information tabulating device, processing by which the operation information is transmitted to the information tabulating device through the communication section.

6. An information tabulating device comprising:
a second collection section which performs at least one of collection of respective operation information from each of a plurality of the photography apparatus according to any one of claims 1-4, and collection of photographing information from each of the plurality of photography apparatus which is provided with a function by which a subject is photographed and image data obtained by the photographing is recorded in an information storage medium together with the photographing information representing photographing conditions during photographing; and
a tabulation section which tabulates, for each model of the photography apparatus, the operation information or the photographing information, which has been collected by the second collection section.

7. A method of utilizing tabulated information, wherein:
at least one of the suitability of the performance with which a photography apparatus is provided, the suitability of the functions with which the photography apparatus is provided, and the durability of the photography apparatus is analyzed for each model of the photography apparatus, based on operation information or photographing information, which has been collected by the information tabulating device according to claim 5, for each model of the photography apparatuses, and the analyzed results are used for the design of the photography apparatus.

8. A method of utilizing tabulated information according to claim 6, wherein lifetimes of components in the photography apparatus are analyzed for each of the photography apparatus, based on the operation information or the photographing information, which has been collected by the information tabulating device according to claim 5, and advice information representing advice regarding change or replacement of components in the photography apparatus is generated for each of the photography apparatus, based on results of the analysis.
